# FASCICULE DE BREVET EUROPEEN

(11) **EP 0 990 568 B1**
(45) Date de publication et mention de la délivrance du brevet: **29.10.2003**
(21) Numéro de dépôt: 99402373.7
(22) Date de dépôt: 29.09.1999
(51) Int. Cl.: B60S 1/08, B60S 1/16

(54) **Dispositif de protection du moteur d'un module d'entraînement d'un essuie-vitre**
Schutzvorrichtung eines Motors eines Scheibenwischerantriebsmodules
Protection device for the motor of a windscreen wiper drive module

(30) Priorité: 01.10.1998 FR 9812254
(43) Date de publication de la demande: 05.04.2000
(73) Titulaire: AUTOMOBILES PEUGEOT, 75116 Paris (FR); AUTOMOBILES CITROEN, 92200 Neuilly-sur-Seine (FR)
(72) Inventeur: Jaux, Thierry, 25400 Taillecourt (FR)
(74) Mandataire: Gendraud, Pierre

(56) Documents cités:
- DE-A- 3 406 686
- DE-A- 3 730 448
- FR-A- 2 747 088
- US-A- 4 700 026

## Description

L'invention se rapporte à un dispositif de protection du moteur d'un module d'entraînement d'un essuie-vitre.

L'invention concerne plus particulièrement un dispositif permettant de limiter le couple résistant que doit vaincre le moteur électrique qui entraîne le ou les balais d'un essuie-vitre de véhicule, notamment automobile.

Le moteur d'entraînement du ou des balais d'un essuie-vitre doit vaincre un couple résistant plus ou moins important en fonction de la quantité d'eau s'écoulant sur le pare-brise, ou en fonction de la quantité de saletés, de givre ou de neige présents sur le pare-brise. Lorsque ce couple résistant devient trop important, le moteur surchauffe et se détériore.

Il est connu de protéger le moteur d'un essuie-vitre au moyen d'un disjoncteur thermique qui est calibré exactement pour le moteur auquel il est associé. Cependant, ce type de protection a pour principal inconvénient son coût élevé.

Le document FR 2 736 023 décrit un dispositif de protection d'un moteur d'essuie-vitre comportant un système de gestion électronique qui effectue une mesure du temps de balayage, et une détection d'un éventuel blocage de l'essuie-vitre. Lorsque le temps de balayage mesuré est supérieur à une valeur normale déterminée, le système de gestion électronique assure automatiquement, soit une diminution de la vitesse de balayage, soit un arrêt momentané de ce balayage.

Un autre état de la technique, US 4700026, décrit le préambule de la revendication 1.

Cependant, ce type de dispositif, qui est d'une grande complexité, est coûteux et fragile. Un but de la présente invention est de proposer un dispositif de protection du moteur d'un module d'entraînement d'un essuie-vitre palliant tout ou partie des inconvénients de l'art antérieur relevés ci-dessus.

Ce but est atteint par le fait que le dispositif de protection du moteur d'un module d'entraînement d'un essuie-vitre comporte un arbre menant entraîné en rotation par le moteur et un arbre mené engrenant avec l'arbre menant, l'arbre menant étant guidé de manière à pouvoir coulisser selon une direction parallèle à son axe de rotation, de façon que, lorsqu'un couple résistant d'intensité déterminée est appliqué sur l'arbre mené, l'arbre menant coulisse et actionne un contact qui interrompt l'alimentation du moteur.

Selon une autre particularité le dispositif comporte des premiers moyens de rappel qui sollicitent l'arbre menant dans une direction antagoniste à celle de l'actionnement du contact d'interruption de l'alimentation du moteur.

Selon une autre particularité l'actionnement du contact d'interruption assure l'alimentation de moyens de commutation temporisés qui commandent l'interruption de l'alimentation du moteur pendant une durée déterminée.

Selon une autre particularité les moyens de commutation temporisés sont constitués d'un relais temporisé qui commande un interrupteur basculant apte à ouvrir ou fermer le circuit d'alimentation du moteur.

Selon une autre particularité le dispositif comporte un doigt d'actionnement mobile et des seconds moyens de rappel sollicitant le doigt d'actionnement pour le maintenir en contact avec l'une des extrémités de l'arbre menant, le doigt d'actionnement étant apte à être déplacé par l'arbre menant lors du coulissement de ce dernier et comporte une surface conductrice de façon à assurer la fermeture ou l'ouverture du circuit d'alimentation du relais temporisé.

Selon une autre particularité les premiers moyens de rappel sont constitués d'un ressort de compression dont la raideur est déterminée pour permettre l'actionnement du contact dès que l'intensité du couple résistant appliqué sur l'arbre mené excède une valeur seuil déterminée.

Selon une autre particularité les seconds moyens de rappel sont constitués d'un ressort de compression de raideur déterminée.

D'autres caractéristiques et avantages de l'invention apparaîtront à la lecture de la description détaillée qui va suivre, pour la compréhension de laquelle on se reportera aux dessins annexés, dans lesquels :
- la figure 1 représente une vue en coupe d'une partie d'un dispositif de protection du moteur d'un module d'entraînement d'un essuie-vitre conforme à l'invention,
- la figure 2 représente schématiquement le circuit électrique de fonctionnement du dispositif de protection conforme à l'invention.

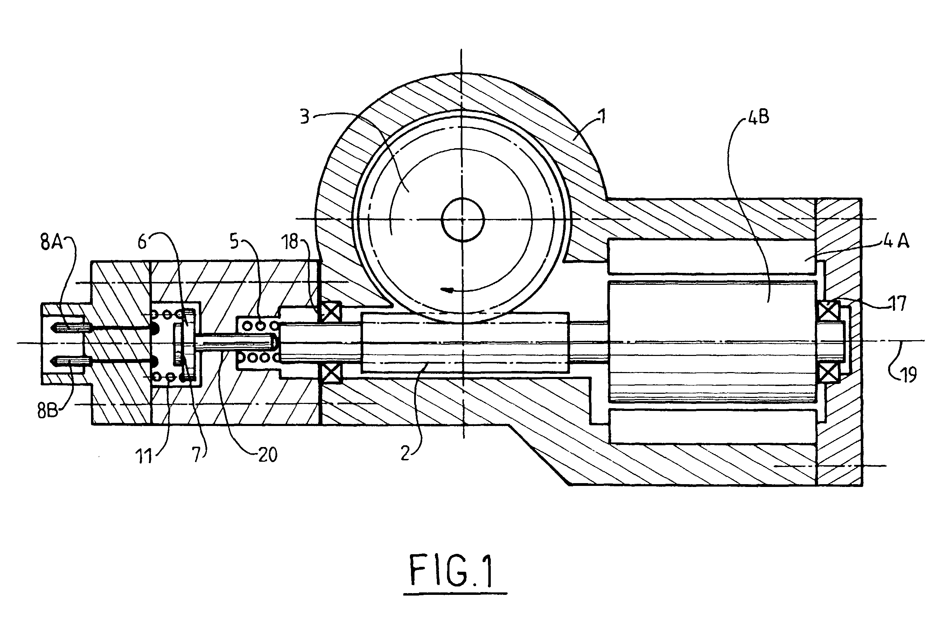

Le module d'entraînement de l'essuie-vitre représenté à la figure 1 comporte un boîtier 1 dans lequel sont disposés un arbre denté menant 2, qui est entraîné en rotation par un moteur électrique 4A, 4B, et un arbre denté mené 3, qui engrène avec l'arbre menant 2. Le moteur électrique comporte un stator 4A et un rotor 4B, l'arbre menant 2 étant solidaire en rotation du rotor 4B.

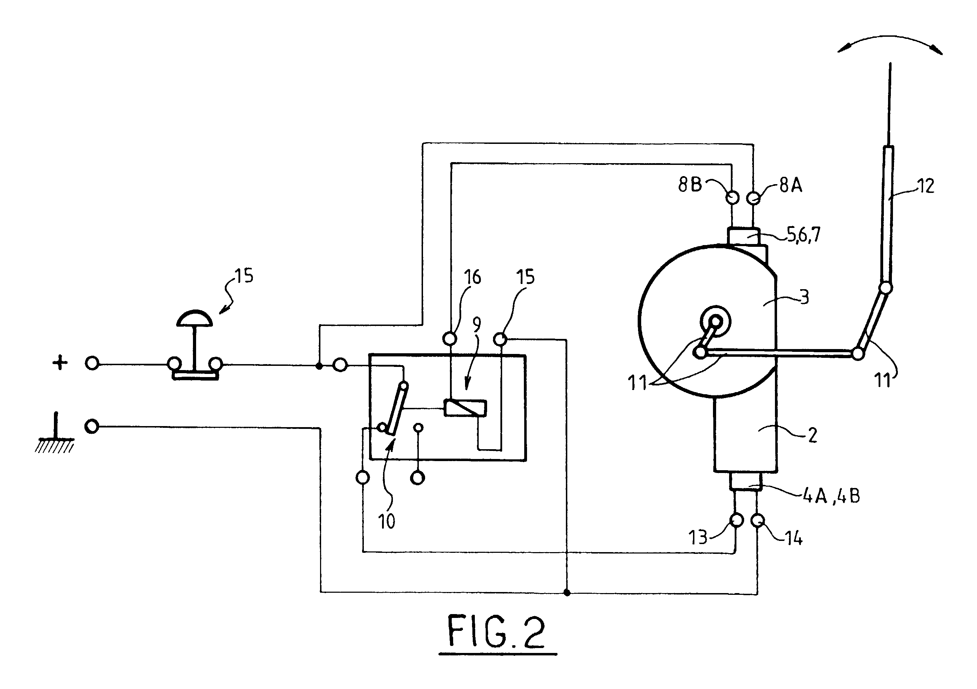

L'arbre mené 3 comporte classiquement une roue dentée qui engrène avec l'arbre menant 2, pour constituer un ensemble de transmission à vis sans fin 2 et roue tangente 3. Le ou les balais 12 de l'essuie-vitre sont entraînés en rotation selon un mouvement de va-et-vient par l'arbre mené 3 au moyen d'un système de biellettes 11 de renvoi (figure 2).

La figure 2 représente le schéma de principe du circuit électrique du dispositif de protection du moteur de l'essuie-vitre conforme à l'invention.

Les deux bornes 13, 14 de connexion du moteur 4A, 4B électrique de l'essuie-vitre sont reliées respectivement aux deux bornes "+" et "masse" de l'alimentation électrique. La boucle de liaison électrique du moteur 4A, 4B à l'alimentation comporte un premier interrupteur 15 permettant de commander la mise en marche ou l'arrêt de l'essuie-vitre.

Par ailleurs, la boucle qui relie le moteur 4A, 4B à l'alimentation comporte un second interrupteur 10. Ce second interrupteur 10 est situé sur la même ligne que le premier 15 interrupteur, entre ce dernier et le moteur 4A, 4B. Le second interrupteur 10 est commandé par un relais 9, qui est relié à l'alimentation au moyen d'une boucle comportant un contact limiteur de couple 7 décrit en détail ci-après.

Une première 15 des deux bornes 15, 16 du relais 9 est reliée à la ligne qui relie le moteur 4A, 4B à la masse. La seconde borne 16 du relais 9 est reliée à la borne + de l'alimentation, entre les premier 15 et second 16 interrupteurs.

Le contact 7 limiteur de couple est situé sur la ligne qui relie la seconde borne 16 du relais 9 à la borne + de l'alimentation.

Dans des conditions de fonctionnement normal de l'essuie-vitre, le contact 7 limiteur de couple est dans sa position dans laquelle il ouvre le circuit d'alimentation du relais 9. C'est-à-dire que le relais 9 n'est pas alimenté et que le second interrupteur 10 est dans sa position dans laquelle il ferme le circuit d'alimentation du moteur 4A, 4B de l'essuie-vitre. Ainsi, lorsque le premier interrupteur 15 ferme le circuit d'alimentation du moteur 4A, 4B, comme représenté à la figure 2, le moteur 4A, 4B est alimenté en courant et fait fonctionner l'essuie-vitre.

Comme décrit plus en détail ci-après, lorsque le couple résistant appliqué à l'arbre mené 3 excède une valeur limite déterminée, en raison par exemple, de la présence de neige, de givre ou de saletés sur le pare-brise, le contact 7 limiteur de couple 7 ferme le circuit d'alimentation du relais 9. Le relais 9 est alors alimenté et commute le second interrupteur 10 dans sa position dans laquelle il ouvre le circuit d'alimentation du moteur 4A, 4B. L'alimentation du moteur est ainsi coupé, le ou les balais 12 d'essuyage ne sont plus entraînés.

De préférence, le relais 9 est un relais temporisé qui commute le second interrupteur 10 (et donc interrompt l'alimentation du moteur 4A, 4B) pendant une durée déterminée.

Lorsque le couple résistant appliqué à l'arbre mené 3 devient inférieur à la valeur limite mentionnée ci-dessus, le contact limiteur de couple 7 ouvre le circuit d'alimentation du relais 9. Ceci provoque la commutation du second interrupteur 10 dans sa position dans laquelle il ferme le circuit d'alimentation du moteur 4A, 4B. Le balai 12 d'essuyage est donc à nouveau entraîné dans son mouvement de va-et-vient.

Ainsi, le dispositif de protection selon l'invention arrête automatiquement le fonctionnement du moteur dès que les conditions d'utilisation de l'essuie-vitre sont susceptibles de l'abîmer.

La figure 1 illustre le mécanisme d'actionnement du contact 6, 7 limiteur de couple mentionné ci-dessus.

L'ensemble constitué par le rotor 4B et l'arbre menant 3 est monté rotatif dans le boîtier 1 autour de son axe 19 de symétrie longitudinal au moyen de paliers ou roulements 17, 18. Cet ensemble rotor 48-arbre menant 2 est monté dans le boîtier 1 de façon à pouvoir coulisser selon direction parallèle à son axe 19 de symétrie longitudinal.

De préférence, l'ensemble rotor 4B-arbre menant 2 peut coulisser légèrement selon cette direction longitudinale dans le sens du rotor 4B vers l'arbre 2 menant, des moyens de butée limitant le coulissement de cet ensemble dans l'autre sens. Comme représenté à la figure 1, ces moyens de butée peuvent être constitués d'un palier ou roulement 17 du rotor 4B qui coopère avec un épaulement formé par le corps du rotor 4B.

Un premier 5 ressort de compression est disposé dans le corps du module d'entraînement de l'essuie-vitre, de façon à solliciter ou pousser l'arbre menant 2 dans la direction longitudinale opposée à celle dans laquelle l'arbre menant 2 peut coulisser. C'est-à-dire qu'une première des deux extrémités du ressort 5 prend appui sur le corps du module d'entraînement tandis que la seconde extrémité du ressort 5 est en appui sur l'extrémité libre de l'arbre 2 menant 2.

Le corps du module d'entraînement comporte par ailleurs un alésage 20 dans lequel coulisse un doigt 6 d'actionnement ayant sensiblement la forme d'un T. Le pied du T formé par le doigt 6 d'actionnement est monté coulissant dans l'alésage 20 selon sensiblement la même direction que l'axe 19 de symétrie longitudinal de l'ensemble rotor 4B-arbre menant.

Le doigt 6 d'actionnement est sollicité par un second ressort 11 de compression contre l'extrémité libre de l'arbre menant 2. Plus précisément, une première des deux extrémités du second ressort 11 est en appui sur le corps du module d'entraînement, tandis que la seconde extrémité du ressort 11 est en appui sur la tête du T formé par le doigt 6 d'actionnement. Ainsi, l'extrémité libre du pied du T formé par le doigt 6 d'actionnement se déplace à l'intérieur du premier ressort 5 et est maintenue contre l'extrémité de l'arbre menant 2.

La tête du T formé par le doigt 6 d'actionnement comporte une surface conductrice 7 apte à établir un contact entre deux bornes 8A, 8B du circuit d'alimentation du relais 9 décrit ci-dessus en référence à la figure 2.

Ainsi, lorsqu'un couple résistant est appliqué sur l'arbre mené 3, un effort axial est transmis à l'arbre menant 2 qui tend à déplacer ce dernier longitudinalement. Le dispositif est conformé de façon que l'effort axial transmis à l'arbre 2 menant tend à déplacer ce dernier dans le sens dans lequel il comprime les premier 5 et second 11 ressorts.

Les raideurs des premier 5 et second 11 ressorts sont déterminées de façon que, dès que l'intensité du couple résistant appliqué sur l'arbre mené 3 excède une valeur seuil déterminée, l'arbre 2 comprime les ressorts 5, 11 et déplace le doigt 6 d'actionnement de façon que la surface conductrice 7 ferme le circuit d'alimentation du relais 9. Comme décrit précédemment, la fermeture du circuit d'alimentation du relais 9 assure la coupure de l'alimentation du moteur 4A, 4B électrique.

Cette valeur seuil du couple résistant au-delà de laquelle l'arbre menant 2 commande la fermeture du circuit d'alimentation du relais 9 est déterminé en fonction, notamment, des caractéristiques de fonctionnement du moteur 4A, 4B.

Lorsque l'intensité du couple résistant appliqué sur l'arbre mené 3 redevient inférieur à la valeur seuil, le ressort 5 repousse l'arbre 2 menant. Simultanément, le doigt 6 d'actionnement est repoussé par le second ressort 11 dans une position dans laquelle le circuit d'alimentation du relais 9 est ouvert. Cette ouverture du circuit d'alimentation du relais 9 assure la fermeture du circuit d'alimentation du moteur 4A, 4B électrique.

On conçoit donc aisément que le dispositif selon l'invention permet de protéger le moteur d'un essuie-vitre au moyen d'un mécanisme simple, peu coûteux et fiable.

Le dispositif décrit est particulièrement adapté aux essuie-vitre arrières de véhicules automobiles, mais il peut être utilisé dans d'autres types d'essuie-vitre.

## Revendications

1. Dispositif de protection du moteur (4A, 4B) d'un module d'entraînement d'un essuie-vitre comportant un arbre (2) menant entraîné en rotation par le moteur (4A, 4B) et un arbre mené (3) engrenant avec l'arbre menant (2), **caractérisé en ce que** l'arbre menant (2) est guidé de manière à pouvoir coulisser selon une direction parallèle à son axe (19) de rotation, de façon que, lorsqu'un couple résistant d'intensité déterminée est appliqué sur l'arbre mené (3), l'arbre menant (2) coulisse et actionne un contact (7) qui interrompt l'alimentation du moteur (4A, 4B).

2. Dispositif de protection du moteur (4A, 4B) d'un module d'entraînement d'un essuie-vitre selon la revendication 1 **caractérisé en ce qu'**il comporte des premiers moyens (5) de rappel qui sollicitent l'arbre menant (2) dans une direction antagoniste à celle de l'actionnement du contact (7) d'interruption de l'alimentation du moteur (4A, 4B).

3. Dispositif de protection du moteur (4A, 4B) d'un module d'entraînement d'un essuie-vitre selon la revendication 1 ou 2 **caractérisé en ce que** l'actionnement du contact (7) d'interruption assure l'alimentation de moyens (9, 10) de commutation temporisés qui commandent l'interruption de l'alimentation du moteur (4A, 4B) pendant une durée déterminée.

4. Dispositif de protection du moteur (4A, 4B) d'un module d'entraînement d'un essuie-vitre selon la revendication 3 **caractérisé en ce que** les moyens (9, 10) de commutation temporisés sont constitués d'un relais (9) temporisé qui commande un interrupteur (10) basculant apte à ouvrir ou fermer le circuit d'alimentation du moteur (4A, 4B).

5. Dispositif de protection du moteur (4A, 4B) d'un module d'entraînement d'un essuie-vitre selon la revendication 4 **caractérisé en ce qu'**il comporte un doigt (6) d'actionnement mobile et des seconds moyens (11) de rappel sollicitant le doigt (6) d'actionnement pour le maintenir en contact avec l'une des extrémités de l'arbre menant (2), le doigt (6) d'actionnement étant apte à être déplacé par l'arbre (2) menant lors du coulissement de ce dernier et comporte une surface conductrice (7) de façon à assurer la fermeture ou l'ouverture du circuit d'alimentation du relais (9) temporisé.

6. Dispositif de protection du moteur (4A, 4B) d'un module d'entraînement d'un essuie-vitre selon la revendication 2 **caractérisé en ce que** les premiers moyens de rappel sont constitués d'un ressort (5) de compression dont la raideur est déterminée pour permettre l'actionnement du contact (5 à 7) dès que l'intensité du couple résistant appliqué sur l'arbre mené (3) excède une valeur seuil déterminée.

7. Dispositif de protection du moteur (4A, 4B) d'un module d'entraînement d'un essuie-vitre selon la revendication 5 **caractérisé en ce que** les seconds moyens de rappel sont constitués d'un ressort de compression (11) de raideur déterminée.

## Patentansprüche

1. Vorrichtung zum Schutz des Motors (4A, 4B) eines Scheibenwischerantriebsmoduls mit einer durch den Motor (4A, 4B) drehangetriebenen Antriebswelle (2) und einer mit der Antriebswelle (2) in Eingriff stehenden Abtriebswelle (3), **dadurch gekennzeichnet, dass** die Antriebswelle (2) so geführt wird, dass sie entlang einer parallel zu ihrer Drehachse (19) verlaufenden Richtung gleiten kann, so dass die Antriebswelle (2) bei Anlegen eines Widerstandsmoments bestimmter Stärke an die Abtriebswelle (3) gleitet und einen Kontakt (7) betätigt, der die Versorgung des Motors (4A, 4B) unterbricht.

2. Vorrichtung zum Schutz des Motors (4A, 4B) eines Scheibenwischerantriebsmoduls nach Anspruch 1, **dadurch gekennzeichnet, dass** sie erste Rückholmittel (5) aufweist, die die Antriebswelle (2) in einer Gegenrichtung zu der Betätigungsrichtung des Kontakts (7) zur Unterbrechung der Versorgung des Motors (4A, 4B) vorspannen.

3. Vorrichtung zum Schutz des Motors (4A, 4B) eines Scheibenwischerantriebsmoduls nach Anspruch 1 oder 2, **dadurch gekennzeichnet, dass** die Betätigung des Unterbrechungskontakts (7) die Versorgung von Verzögerungsschaltmitteln (9, 10), die die Unterbrechung der Versorgung des Motors (4A, 4B) während einer bestimmten Dauer ansteuern, gewährleisten.

4. Vorrichtung zum Schutz des Motors (4A, 4B) eines Scheibenwischerantriebsmoduls nach Anspruch 3, **dadurch gekennzeichnet, dass** die Verzögerungsschaltmittel (9, 10) aus einem Verzögerungsrelais (9) bestehen, das einen Kippschalter (10) ansteuert, der den Versorgungskreis des Motors (4A, 4B) öffnen oder schließen kann.

5. Vorrichtung zum Schutz des Motors (4A, 4B) eines Scheibenwischerantriebsmoduls nach Anspruch 4, **dadurch gekennzeichnet, dass** sie einen beweglichen Betätigungsfinger (6) und zweite Rückholmittel (11) aufweist, die den Betätigungsfinger (6) so vorspannen, dass er mit einem der Enden der Antriebswelle (2) in Kontakt bleibt, wobei der Betätigungsfinger (6) durch die Antriebswelle (2) bewegt werden kann, wenn diese letztere verschoben wird, und eine leitende Fläche (7) aufweist, um das Schließen oder Öffnen des Versorgungskreises des Verzögerungsrelais (9) zu gewährleisten.

6. Vorrichtung zum Schutz des Motors (4A, 4B) eines Scheibenwischerantriebsmoduls nach Anspruch 2, **dadurch gekennzeichnet, dass** die ersten Rückholmittel durch eine Druckfeder (5) gebildet werden, deren Steife so bestimmt ist, dass sie die Betätigung des Kontakts (5 bis 7) gestattet, sobald die Stärke des an die Abtriebswelle (3) angelegten Widerstandsmoments einen vorbestimmten Schwellwert überschreitet.

7. Vorrichtung zum Schutz des Motors (4A, 4B) eines Scheibenwischerantriebsmoduls nach Anspruch 5, **dadurch gekennzeichnet, dass** die zweiten Rückholmittel durch eine Druckfeder (11) mit bestimmter Steife gebildet werden.

## Claims

1. Device for protecting the motor (4A, 4B) of a windscreen wiper drive module comprising a drive shaft (2), driven in rotation by the motor (4A, 4B) and a driven shaft (3) in mesh with the drive shaft (2), **characterized in that** the drive shaft (2) is guided in such a way as to be able to slide in the direction parallel to its axis (19) of rotation so that, when a resistive torque of given intensity is applied to the driven shaft (3), the drive shaft (2) slides and actuates a contact (7) which interrupts the power supply to the motor (4A, 4B).

2. Device for protecting the motor (4A, 4B) of a windscreen wiper module according to Claim 1, **characterized in that** it comprises first return means (5) which urge the drive shaft (2) in an opposite direction to the direction of actuation of the contact (7) that interrupts the power supply to the motor (4A, 4B).

3. Device for protecting the motor (4A, 4B) of a windscreen wiper drive module according to Claim 1 or 2, **characterized in that** actuation of the interrupt contact (7) powers timed switching means (9, 10) which cause the power supply to the motor (4A, 4B) to be interrupted for a given length of time.

4. Device for protecting the motor (4A, 4B) of a windscreen wiper module according to Claim 3, **characterized in that** the timed switching means (9, 10) consist of a timed relay (9) which controls a toggle switch (10) able to open or close the circuit supplying power to the motor (4A, 4B).

5. Device for protecting the motor (4A, 4B) of a windscreen wiper drive module according to Claim 4, **characterized in that** it comprises a moving actuating finger (6) and second return means (11) urging the actuating finger (6) to keep it in contact with one of the ends of the drive shaft (2), the actuating finger (6) being able to be moved by the drive shaft (2) as the latter slides and comprises a conducting surface (7) so as to close or open the timed relay (9) supply circuit.

6. Device for protecting the motor (4A, 4B) of a windscreen wiper drive module according to Claim 2, **characterized in that** the first return means consist of a compression spring (5) the stiffness of which is determined to allow the contact (5 to 7) to be actuated as soon as the intensity of resistive torque applied to the driven shaft (3) exceeds a given threshold value.

7. Device for protecting the motor (4A, 4B) of a windscreen wiper drive module according to Claim 5, **characterized in that** the second return means consist of a compression spring (11) of determined stiffness.
